# EUROPEAN PATENT SPECIFICATION

(11) **EP 4 272 102 B1**
(45) Date of publication and mention of the grant of the patent: **27.11.2024**
(21) Application number: 21823242.9
(22) Date of filing: 29.11.2021
(51) Int. Cl.: H04L 9/08, H04L 9/32, H04L 9/40, G06F 21/60

(54) **METHODS FOR ANONYMITY AUTHENTICATION AND MESSAGE EXCHANGE IN A CLOUD**
VERFAHREN ZUR ANONYMITÄTSAUTHENTIFIZIERUNG UND NACHRICHTENAUSTAUSCH IN EINER CLOUD
PROCÉDÉS D'AUTHENTIFICATION D'ANONYMAT ET D'ÉCHANGE DE MESSAGES DANS UN NUAGE

(43) Date of publication of application: 08.11.2023
(73) Proprietor: Huawei Technologies Co., Ltd., Shenzhen, Guangdong 518129 (CN)
(72) Inventor: LI, Yong, 80992 Munich (DE)
(74) Representative: Körber, Martin Hans
(86) International application number: PCT/EP2021/083340
(87) International publication number: WO 2023/094008

(56) References cited:
- LIN X ET AL: "ASRPAKE: An Anonymous Secure Routing Protocol with Authenticated Key Exchange for Wireless Ad Hoc Networks", PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 1 June 2007 (2007-06-01), pages 1247 - 1253, XP031125844, ISBN: 978-1-4244-0353-0
- BUTTNER CARSTEN ET AL: "A novel anonymous authenticated key agreement protocol for vehicular ad hoc networks", 2015 INTERNATIONAL CONFERENCE ON INFORMATION SYSTEMS SECURITY AND PRIVACY (ICISSP), SCITEPRESS, 9 February 2015 (2015-02-09), pages 259 - 269, XP032923714

## Description

### TECHNICAL FIELD

The disclosure relates to authentication and accesses, more particularly, the disclosure relates to methods and devices for anonymity authentication and message exchange in a cloud with improved security and privacy protection. The disclosure relates to a method of sending an encrypted message from a client device to a server. The disclosure is also related to a method of receiving the encrypted message from the client device by the server. The disclosure is also related to a client device and to a server. Further, the disclosure is related to computer programs to perform the aforementioned methods.

### BACKGROUND

Anonymity authentication is a process of confirming a right to access one or more data or to perform one or more services. Normally, an authentication requires user credentials such as a username and a password, where the anonymity authentication confirms rights to access the one or more data or to perform the one or more services without exposing their actual identity of the user. The anonymity of communication parties needs to remain hidden in a successful protocol for privacy protection requirements of authentication and message exchange scenarios. Further, the protocol has to protect user privacy including access to sensitive web-service, an investment web-service, personal financial information uploaded to a cloud server, a device's location information uploaded to the cloud server.

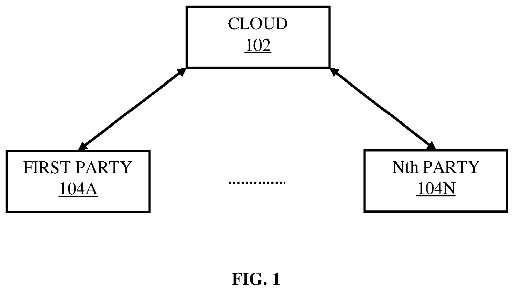

FIG. 1 illustrates a block diagram that illustrates authentication of one or more parties **104A-N** according to the prior art. The block diagram includes a cloud 102 and the one or more parties **104A-N** that are communicatively connected to the cloud 102. Each of the one or more parties **104A-N** includes a secret key and a public key. The one or more parties **104A-N** enables a secure channel establishment process with any of a Transport Layer Security, TLS, an Internet Protocol Security, IPSec, an Authenticated Key Exchange, AKE, or an Advanced Configurable Crypto Environment, ACCE, protocol, that enables sending of information with identification information, the public key and the secret key, associated with the one or more parties **104A-N.** Even with the secure channel establishment between the one or more parties **104A-N** and the cloud **102,** there is a chance of leakage of privacy of one or more parties **104A-N,** which sending and receiving the information. As the identification information is also sent with the information, attackers may get the message along with the identification information.

Currently, there are several known solutions are available, including the AKE, ACCE protocols, TLS, and IPSec, that provide the authentication, integrity, and confidentiality for exchanging messages, but those solutions expose the identification information (i.e. an identity of the user). The cloud **102** may obtain the user's privacy behavior based on the user's identity information and data, resulting in revealing the user's privacy. Another existing solution is a Broadcast Encryption based solution, that enables a sender to encrypt the message directly with all group members public keys and sends ciphertexts to all group members. Only a receiver with a matching private key can decrypt the message, while other receivers fail to decrypt the ciphertexts. The existing solutions disclose the identification information of the one or more parties **104A-N** to the attackers, that are in communication. The solutions like TLS 1.3, a Quick UDP Internet Connection, QUIC, IPsec Internet Key Exchange, IKE and Secure Shell, SSH protects the messages in the protocol including identity-related data such as identities, public keys, or digital signatures, that may also reveal the user's privacy. The document LIN X ET AL: "ASRPAKE: An Anonymous Secure Routing Protocol with Authenticated Key Exchange for Wireless Ad Hoc Networks", PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 1 June 2007 (2007-06-01), pages 1247-1253, XPO31125844, ISBN: 978-1-4244-0353-0, describes an anonymous secure routing protocol (ASRPAKE) for mobile ad hoc networks (MANETs) focused on maintaining security and anonymity through authenticated key exchange mechanisms embedded within the routing algorithm. The document BUTTNER CARSTEN ET AL: "A novel anonymous authenticated key agreement protocol for vehicular ad hoc networks", 2015 INTERNATIONAL CONFERENCE ON INFORMATION SYSTEMS SECURITY AND PRIVACY (ICISSP), SCITEPRESS, 9 February 2015 (2015-02-09), pages 259-269, XP032923714, describes a novel anonymous authenticated key agreement protocol designed for vehicular ad hoc networks (VANETs), leveraging the combination of Elliptic Curve Integrated Encryption Scheme (ECIES) with ring signatures.

Therefore, the present invention aims to improve the security and privacy protection of existing systems or technologies in anonymity authentication and message exchange.

### SUMMARY

It is an object of the disclosure to provide a method of sending an encrypted message from a client device to a server, and a method of receiving the encrypted message from the client device by the server with improved security on anonymity authentication and message exchange, and privacy protection while avoiding one or more disadvantages of prior art approaches. A client device, a server, and a computer program are also provided.

This object is achieved by the features of the independent claims. Further implementations are apparent from the dependent claims, the description, and the figures. In the following, parts of the description and drawings referring to embodiments which are not covered by the claims are not presented as embodiments of the invention, but as examples useful for understanding the invention.

The disclosure provides a method of sending an encrypted message from a client device to a server and a method of receiving the encrypted message from the client device by the server. According to a first aspect, there is provided a method of sending an encrypted message from a client device to a server. The method includes selecting a subgroup of neighbouring devices by the client device. The method includes computing, by the client device, a ring signature based on a secret key of the client device, a hash value generated by the client device, and a public key of each neighbouring device. The method includes calculating a session key based on a concatenation of a public server key and the generated hash value by the client device. The method includes encrypting a message using the session key and sending the encrypted message to the server with the generated hash value and the ring signature.

This method uses a passive key exchange and the ring signature that builds a privacy-preserving authenticated key agreement solution during this entire process. The method enables the one or more parties including the client device to establish a secure communication channel for secure message exchange, thereby providing anonymity authentication and secure message exchange for communication partners. The method provides secure communication with message authentication, integrity, and confidentiality. The method provides privacy protection and does not disclose any identification information of the one or more parties that are in communication, e.g. party ID, Domain Name, and the like. The method improves security on anonymity authentication and message exchange. The method provides better compatibility and a friendly integration environment.

The one or more parties may add the identification information and a public key for any type of message, and send it to any client device in the one or more parties through the server, thereby providing a privacy-preserving authentication and secure data exchange. The method shows the message as an anonymous ID and the public key belonging to the one or more parties. The method does not involve any trusted third party in the one or more parties. The method does not require any knowledge, consent, or assistance of other parties to build a subgroup. The method does not include any pre-defined group, a manager, a group public key, a setup for registration or revocation procedures.

The method includes security properties of an authentication for the client device and the server, a secure channel establishment, data upload or data download confidentiality and integrity, and anonymity of the client device. The method provides high performance in securing the channel establishment in the client device and the server.

Optionally, the client device and each neighbouring device receive the public key from the server.

Optionally, the hash value is generated from a random number using a hash function.

Optionally, the ring signature is based on a concatenation of the secret key of the client device, the hash value generated by the client device, and the public key of each neighbouring device.

Optionally, the session key is calculated using a key derivation function including a pseudorandom function.

Optionally, the method includes encrypting the message includes using an authenticate encryption with associated data.

According to a second aspect, there is provided a method of receiving an encrypted message from a client device by a server. The method includes receiving, by the server, an encrypted message from a client device, the encrypted message including a hash value generated by the client device and a ring signature based on a secret key of the client device, the hash value generated by the client device, and a public key of each neighbouring device in a subgroup of neighbouring devices selected by the client device. The method includes verifying, by the server, the ring signature using the public key of each neighbouring device in the subgroup. The method includes calculating, by the server, a session key based on a concatenation of a public server key and the generated hash key value received from the client device.

This method uses a passive key exchange and the ring signature that builds a privacy-preserving authenticated key agreement solution during this entire process. The method enables the one or more parties including the client device to establish a secure communication channel for secure message exchange, thereby providing anonymity authentication and secure message exchange for communication partners. The method provides secure communication with message authentication, integrity and confidentiality. The method provides privacy protection and does not disclose any identification information of the one or more parties that are in communication, e.g. party ID, Domain Name, and the like. The method improves security on anonymity authentication and message exchange. The method provides better compatibility and a friendly integration environment.

The one or more parties may add the identification information and a public key for any type of message, and send it to any client device in the one or more parties through the server, thereby providing a privacy preserving authentication and secure data exchange. The method shows the message as an anonymous ID and the public key belonging to the one or more parties. The method does not involve any trusted third party in the one or more parties. The method does not require any knowledge, consent, or assistance of other parties to build a subgroup. The method does not include any pre-defined group, a manager, a group public key, a setup for registration or revocation procedures.

The method includes security properties of an authentication for the client device and the server, a secure channel establishment, data upload or data download confidentiality and integrity, an anonymity of the client device. The method provides high performance in securing the channel establishment in the client device and the server.

Optionally, the public key of the client device and each neighbouring device are sent by the server.

Optionally, the hash value is generated from a random number using a hash function.

Optionally, the ring signature is based on a concatenation of the secret key of the client device, the hash value generated by the client device, and the public key of each neighbouring device.

Optionally, the session key is calculated using a key derivation function including a pseudorandom function.

Optionally, the method includes encrypting the message includes using an authenticate encryption with associated data.

According to a third aspect, there is provided a client device. The client device is configured to: select a subgroup of neighbouring devices; compute a ring signature based on a secret key of the client device, a hash value generated by the client device, and a public key of each neighbouring device; calculate a session key based on a concatenation of a public server key and the generated hash value; and encrypt a message using the session key and send the encrypted message to the server with the generated hash value and the ring signature.

According to a fourth aspect, there is provided a server. The server is configured to: receive the encrypted message from the client device, the encrypted message including a hash value generated by the client device and a ring signature based on a secret key of the client device, the hash value generated by the client device, and a public key of each neighbouring device in a subgroup of neighbouring devices selected by the client device; verify the ring signature using the public key of each neighbouring device in the subgroup; and calculate a session key based on a concatenation of a public server key and the generated hash value received from the client device.

According to a fifth aspect, there is provided a computer program. The computer program comprises instructions which, when the program is executed by a processor, cause the processor to carry out the method according to the first aspect or the second aspect.

Therefore, in contradistinction to the prior art, according to the methods, establish a secure communication channel for secure message exchange, and provide anonymity authentication and secure message exchange between the one or more parties. The method improves security on the anonymity authentication and message exchange and provides privacy protection with better compatibility and a friendly integration environment.

These and other aspects of the disclosure will be apparent from the implementations described below.

### BRIEF DESCRIPTION OF DRAWINGS

Implementations of the disclosure will now be described, by way of example only, with reference to the accompanying drawings, in which:
FIG. 1 illustrates a block diagram that illustrates authentication of one or more parties according to the prior art;
FIG. 2 is a block diagram that illustrates sending an encrypted message from a client device to a server and receiving an encrypted message from the client device by the server in accordance with an implementation of the disclosure;
FIG. 3 is a block diagram for an anonymity authentication and message exchange in a cloud in accordance with an implementation of the disclosure;
FIG. 4 is a block diagram of a structure for anonymity authentication and message exchange in a cloud in accordance with an implementation of the disclosure;
FIG. 5 is a block diagram of one or more parties obtaining public information in accordance with an implementation of the disclosure;
FIG. 6 is a flow diagram that illustrates a method of sending an encrypted message from a client device to a server in accordance with an implementation of the disclosure;
FIG. 7 is a flow diagram that illustrates a method of receiving an encrypted message from a client device by a server in accordance with an implementation of the disclosure; and
FIG. 8 is an illustration of a system in which the various architectures and functionalities of the various previous implementations may be implemented.

### DETAILED DESCRIPTION OF THE DRAWINGS

Implementations of the disclosure provide a method of sending an encrypted message from a client device to a server, and a method of receiving the encrypted message from the client device by the server, with improved security on anonymity authentication and message exchange, and privacy protection.

To make solutions of the disclosure more comprehensible for a person skilled in the art, the following implementations of the disclosure are described with reference to the accompanying drawings.

Terms such as "a first", "a second", "a third", and "a fourth" (if any) in the summary, claims, and foregoing accompanying drawings of the disclosure are used to distinguish between similar objects and are not necessarily used to describe a specific sequence or order. It should be understood that the terms so used are interchangeable under appropriate circumstances, so that the implementations of the disclosure described herein are, for example, capable of being implemented in sequences other than the sequences illustrated or described herein. Furthermore, the terms "include" and "have" and any variations thereof, are intended to cover a non-exclusive inclusion. For example, a process, a method, a system, a product, or a device that includes a series of steps or units, is not necessarily limited to expressly listed steps or units but may include other steps or units that are not expressly listed or that are inherent to such process, method, product, or device.

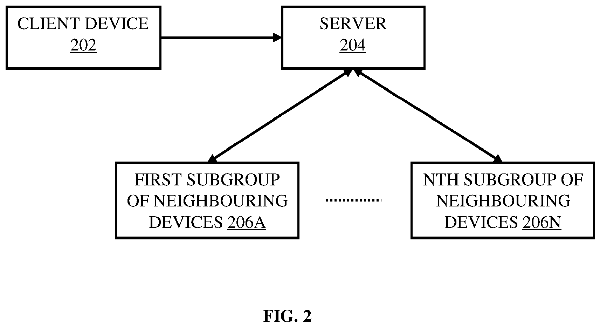

FIG. 2 is a block diagram **200** that illustrates sending an encrypted message from a client device **202** to a server **204** and receiving an encrypted message from the client device **202**by the server **204** in accordance with an implementation of the disclosure. The block diagram **200** includes the client device **202,** the server **204,** and one or more subgroup of neighbouring devices **206AN.** The client device **202** selects a subgroup of neighbouring devices to send the encrypted message to the server **204.** The subgroup of neighbouring devices may be at least one of the one or more neighbouring devices **206A-N.** The client device **202** computes a ring signature based on a secret key of the client device **202,** a hash value generated by the client device **202,** and a public key of each neighbouring device of the selected subgroup of the neighbouring devices. The client device 202 calculates a session key based on a concatenation of a public server key and the hash value generated by the client device **202.** The client device **202** encrypts a message using the session key and sends the encrypted message to the server **204** with the generated hash value and the ring signature.

Optionally, the client device **202** and each neighbouring device receive the public key from the server.

Optionally, the hash value is generated from a random number using a hash function.

Optionally, the ring signature is based on a concatenation of the secret key of the client device **202,** the hash value generated by the client device **202,** and the public key of each neighbouring device.

Optionally, the session key is calculated using a key derivation function including a pseudorandom function.

Optionally, the client device **202** encrypts the message using an authenticate encryption with associated data.

The server **204** receives the encrypted message from the client device **202.** The server **204** verifies the ring signature using the public key of each subgroup of the neighbouring devices. The server **204** calculates the session key based on the concatenation of the public key server and the generated hash value received from the client device **202.** The server **204** sends the encrypted message along with the session key to the selected subgroup of the neighbouring devices. The client device **202** decrypts the encrypted message using the session key.

Optionally, the public key of the client device **202** and each neighbouring device are sent by the server.

Optionally, the hash value is generated from a random number using a hash function.

Optionally, the ring signature is based on a concatenation of the secret key of the client device **202,** the hash value generated by the client device **202,** and the public key of each neighbouring device.

Optionally, the session key is calculated using a key derivation function including a pseudorandom function.

Optionally, the server **204** encrypts the message using an authenticate encryption with associated data.

The client device **202** uses a passive key exchange and the ring signature that builds a privacy-preserving authenticated key agreement solution during this entire process. The server **204** enables the one or more neighbouring devices **206A-N** including the client device **202** to establish a secure communication channel for secure message exchange, thereby providing anonymity authentication and secure message exchange for communication partners. The server **204** provides secure communication with message authentication, integrity, and confidentiality. The server **204** provides privacy protection and does not disclose any identification information of the one or more neighbouring devices **206A-N** that are in communication, e.g. party ID, Domain Name, and the like. The server **204** improves security on anonymity authentication and message exchange. The server **204** provides better compatibility and a friendly integration environment.

The one or more neighbouring devices **206A-N** may add the identification information and a public key for any type of message, and send it to any client device in the one or more neighbouring devices **206A-N** through the server **204,** thereby providing a privacy preserving authentication and secure data exchange. The server **204** shows the message as an anonymous ID and the public key belonging to the one or more neighbouring devices **206A-N.** The server **204** does not involve any trusted third party in the one or more neighbouring devices **206A-N.** The server **204** does not require any knowledge, consent, or assistance of other neighbouring devices to build a subgroup. The server **204** does not include any pre-defined group, a manager, a group public key, a setup for registration or revocation procedures.

The server **204** includes security properties of an authentication for the client device **202** with the server **204,** a secure channel establishment, data upload or data download confidentiality and integrity, an anonymity of the client device **202.** The server **204** provides high performance in securing the channel establishment in the client device **202** with the server **204.**

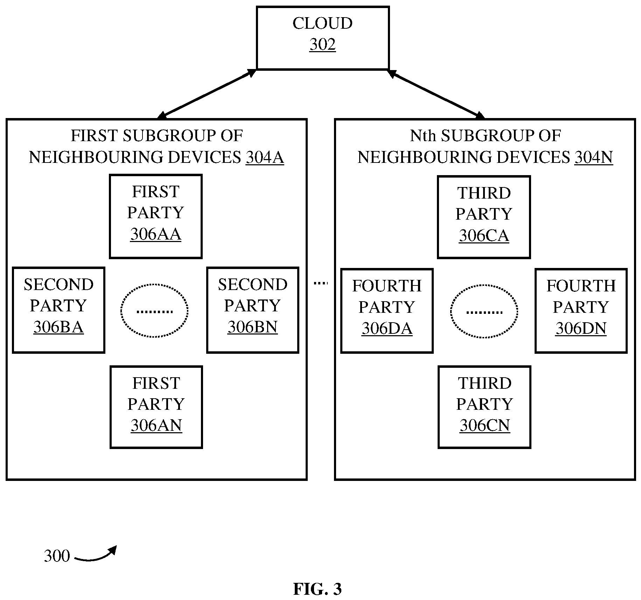

FIG. 3 illustrates a block diagram **300** for an anonymity authentication and message exchange in a cloud **302** in accordance with an implementation of the disclosure. The block diagram **300** includes the cloud **302,** and one or more subgroup of neighbouring devices **304A-N.** The one or more subgroup of neighbouring devices **304A-N** includes a first subgroup of neighbouring devices **304A,** and a Nth subgroup of neighbouring devices **304N.** The first subgroup **304A** includes one or more first parties **306AA-AN,** and one or more second parties **306BA-BN.** The Nth subgroup **304N** includes one or more third parties **306CA-CN,** and one or more fourth parties **306DA-DN.** Optionally, at least one of any of the one or more first parties **306AA-AN,** the one or more second parties **306BA-BN,** the one or more third parties **306CA-CN,** and the one or more fourth parties **306DA-DN** is a client device. Optionally, the cloud **302** is a server.

The client device selects a subgroup of the neighbouring devices and may perform a passive key exchange protocol to send an encrypted message to the cloud **302.**

The client device computes a ring signature with one or more keys. The one or more keys may include a secret key (sk) and a public key (pk). The one or more subgroup of neighbouring devices **304A-N** may obtain the public keys over a public network. The ring signature is a digital signature computed by the client device with the one or more keys. The ring signature may be similar to group signatures. The client device encrypts a message and sends the encrypted message to the cloud **302.** The client device may upload the encrypted message to the cloud **302** with C = ENC (K, plaintext).

The cloud **302** sends the encrypted message to the selected subgroup of the neighbouring devices. Optionally, the selected subgroup of the neighbouring devices includes any of the one or more first parties **306AA-AN,** the one or more second parties **306BA-BN,** the one or more third parties **306CA-CN,** and the one or more fourth parties **306DA-DN.**

One or more parties in the selected subgroup of the neighbouring devices decrypt the encrypted message. The selected subgroup of the neighbouring devices may be the Nth subgroup of neighbouring devices **304N** with the one or more third parties **306CA-CN** and the one or more fourth parties **306DA-DN.** Optionally, the one or more third parties **306CA-CN** and the one or more fourth parties **306DA-DN** in the Nth subgroup of neighbouring devices **304N** download the encrypted message from the cloud **302** with C = ENC (K, plaintext).

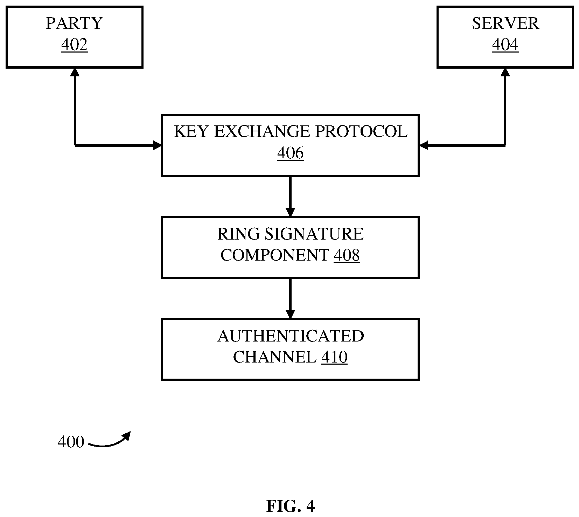

FIG. 4 is a block diagram **400** of a structure for anonymity authentication and message exchange in a server **404** in accordance with an implementation of the disclosure. The block diagram 400 includes a party **402,** a server **404,** a key exchange protocol **406,** a ring signature component **408,** and an authenticated channel **410.** The party **402** sends a message to the server **404** with the key exchange protocol **406.** Optionally, the party **402** is a client device. The party **402** selects a subgroup of neighbouring devices that includes one or more parties. The party **402** may include an identification number with one or more keys. The one or more keys include at least one of a secret key, and a public key. The public key may be obtained over a public network. The key exchange protocol **406** enables the party **402** to perform a passive key exchange. Optionally, the key exchange protocol **406** enables the one or more parties in the subgroup of neighbouring devices to perform the passive key exchange.

The party **402** executes a ring signature on the message based on the passive key exchange. The party **402** may execute the ring signature with the ring signature component **408.** Optionally, the ring signature component **408** includes any of scheme or algorithms to execute the ring signature. The ring signature component 308 may include a Rivest & Shamir & Tauman, RST ring signature scheme. The ring signature enables the party **402** to generate one or more keys, sign the message, and verify a signature of the message. The RST ring signature scheme may add only one modular multiplication and one symmetric encryption per ring member to generate and verify the signature. Optionally, the signature is computed by using a long-term key. Optionally, the ring signature component **408** encrypts the message by executing the ring signature. The ring signature component **408** may encrypt the message with the secret key, which can be used for any of upload or download.

The authenticated channel **410** provides a session key for authentication of the server **404** and the neighbouring devices in the selected subgroup, and secure communication of the message. Optionally, the authenticated channel **410** provides the session key with ENC (K, m). The authenticated channel **410** provides an authenticated secure channel with anonymity. The structure for anonymity authentication and message exchange may not leak identification information of the one or more parties, the party **402,** and the neighbouring devices in the selected subgroup, during protocol processing i.e. during the passive key exchange. Optionally, a generic structure for anonymity authentication and message exchange includes Passive Key Exchange + Generic Ring Signature Scheme = Authentication and Secure Message communication with Perfect Anonymity.

The key exchange protocol **406** sends the encrypted message to the server **404** along with the secret key. The server **404** decrypts the encrypted message with the secret key. Optionally, the server **404** sends the encrypted message to the neighbouring devices in the selected subgroup by the party **402.**

Optionally, the ring signature is cryptographic signature algorithm, that provides only the ring signature of identity information i.e. RingSign (ski, X) to active attackers in the public network. The cryptographic signature algorithms may not enable the active attackers to extract the identity information without a negligible probability. The Ringsign() is a secure cryptographic algorithm for Probabilistic Polynomial-Time Turing (PPT), that may not break anonymity property and extract the identity information.

Optionally, the session keys are assured by a cryptographic Key Derivation Function, KDF, Authenticated Encryption with Associated Data, AEAD scheme, passive static Diffie-Hellman, DH key exchange protocol, and cryptographic signature scheme. The passive static DH and KDF assure randomness of the key, and the signature scheme assures the authentication of the message exchange. The active attackers may get only the ciphertext of key-related information as the AEAD, KDF, passive static DH, and signature scheme are cryptographic encryption algorithms and protocols. The active attackers may not extract the plaintext of session keys without the negligible probability. Optionally, the structure includes a reduction algorithm to break the cryptographic algorithms.

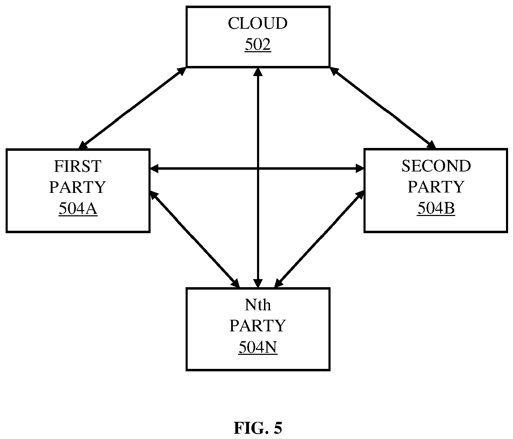

FIG. 5 is a block diagram of one or more parties **504A-N** obtaining public information in accordance with an implementation of the disclosure. The block diagram includes the one or more parties **504A-N** including a first party **504A,** a second party **504B,** and a Nth party **504N,** and a cloud **502.** The one or more parties **504A-N** may include a client device. The cloud **502** may be a server in a public network. The one or more parties **504A-N** retrieves the public information over the public network. Optionally, the public information includes any of an identification information or a long-term public key certificate.

Optionally, the one or more parties **504A-N** include the client device that uploads a message to the cloud **502** without leaking the identification information of the client device to the cloud **502.** The client device selects a subgroup with neighbouring devices. For example, the client device selects a subgroup R with r members, where 1<r=<n, where the subgroup R = {1,...,r}, R_PK = {pk1,..., pkr}, R_ID = {ID₁,..., IDr};

The client device may generate random x, compute x = g^x, compute ring signature: S_i = RingSig (ski, R_PK, x), compute session key and ciphertext of m: K = KDF(pk_s^x, pk_s||x| |string "ENC") ; C = AEAD (K, m) and send (X, S_i, C) to the cloud **402.** Optionally, the client device sends (X, S_i, C) to the cloud **402** along with a public key and a secret key.

Optionally, the cloud **502** verifies S_i using {R_PK}. The cloud **502** may compute a session key if the verification is correct. Optionally, the cloud **502** decrypts the cipher c: K = KDF (X^sk_s, pk_s ||x|| string "ENC" ; m = AEAD (K, C). The cloud **502** may compute the session key and decrypt the cipher with a zero round trip time.

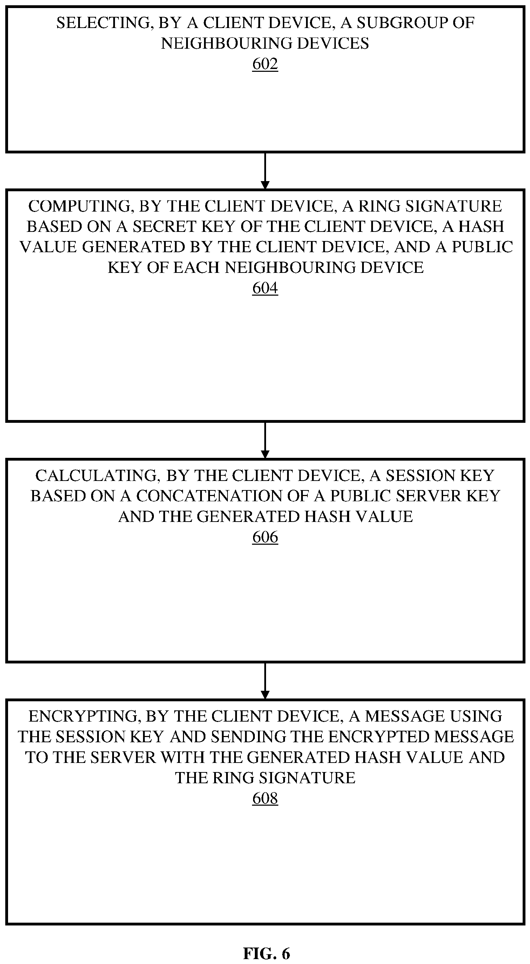

FIG. 6 is a flow diagram that illustrates a method of sending an encrypted message from a client device to a server in accordance with an implementation of the disclosure. At a step **602,** a subgroup of neighbouring devices is selected by the client device. At a step **604,** a ring signature is computed by the client device based on a secret key of the client device, a hash value generated by the client device, and a public key of each neighbouring device. At a step **606,** a session key is calculated by the client device based on a concatenation of a public server key and the generated hash value. At a step **608,** a message is encrypted by the client device using the session key and the encrypted message is sent to the server with the generated hash value and the ring signature.

This method uses a passive key exchange and the ring signature that builds a privacy-preserving authenticated key agreement solution during this entire process. The method enables the one or more parties include the client device to establish a secure communication channel for secure message exchange, thereby providing anonymity authentication and secure message exchange for communication partners. The method provides secure communication with message authentication, integrity and confidentiality. The method provides privacy protection and does not disclose any identification information of the one or more parties that are in communication, e.g. party ID, Domain Name, and the like. The method improves security on the anonymity authentication and message exchange. The method provides better compatibility and a friendly integration environment.

The one or more parties may add the identification information and a public key for any type of messages, and send it to any client device in the one or more parties through the server, thereby providing a privacy preserving authentication and secure data exchange. The method shows the message as an anonymous ID and the public key belonging to the one or more parties. The method does not involve any trusted third party in the one or more parties. The method does not require any knowledge, consent, or assistance of other parties to build a subgroup. The method does not include any pre-defined group, a manager, a group public key, a setup for registration or revocation procedures.

The method includes security properties of an authentication for the client device and the server, a secure channel establishment, data upload or data download confidentiality and integrity, an anonymity of the client device. The method provides high performance in securing the channel establishment in the client device and the server.

Optionally, the client device and each neighbouring device receive the public key from the server.

Optionally, the hash value is generated from a random number using a hash function.

Optionally, the ring signature is based on a concatenation of the secret key of the client device, the hash value generated by the client device, and the public key of each neighbouring device.

Optionally, the session key is calculated using a key derivation function including a pseudorandom function.

Optionally, the method includes encrypting the message includes using an authenticate encryption with associated data.

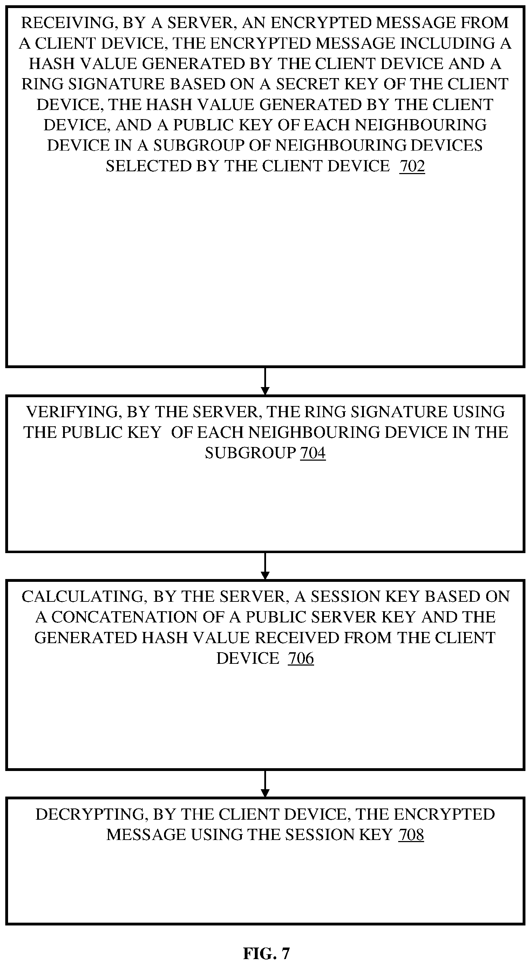

FIG. 7 is a flow diagram that illustrates a method of receiving an encrypted message from a client device by a server in accordance with an implementation of the disclosure. At a step 702, an encrypted message is received by the server from the client device. The encrypted message includes a hash value generated by the client device and a ring signature based on a secret key of the client device, the hash value generated by the client device, and a public key of each neighbouring device in a subgroup of neighbouring devices selected by the client device. At a step **704,** the ring signature is verified by the server using the public key of each neighbouring device in the subgroup. At a step **706,** a session key is calculated by the server based on a concatenation of a public server key and the generated hash value received from the client device. At a step **708,** the encrypted message is decrypted by the client device using the session key.

This method uses a passive key exchange and the ring signature that builds a privacy-preserving authenticated key agreement solution during this entire process. The method enables the one or more parties including the client device to establish a secure communication channel for secure message exchange, thereby providing anonymity authentication and secure message exchange for communication partners. The method provides secure communication with message authentication, integrity, and confidentiality. The method provides privacy protection and does not disclose any identification information of the one or more parties that are in communication, e.g. party ID, Domain Name, and the like. The method improves security on the anonymity authentication and message exchange. The method provides better compatibility and a friendly integration environment.

The one or more parties may add the identification information and a public key for any type of messages, and send it to any client device in the one or more parties through the server, thereby providing a privacy preserving authentication and secure data exchange. The method shows the message as an anonymous ID and the public key belonging to the one or more parties. The method does not involve any trusted third party in the one or more parties. The method does not require any knowledge, consent, or assistance of other parties to build a subgroup. The method does not include any pre-defined group, a manager, a group public key, a setup for registration or revocation procedures.

The method includes security properties of an authentication for the client device and the server, a secure channel establishment, data upload or data download confidentiality and integrity, an anonymity of the client device. The method provides high performance in securing the channel establishment in the client device and the server.

Optionally, the public key of the client device and each neighbouring device are sent by the server.

Optionally, the hash value is generated from a random number using a hash function.

Optionally, the ring signature is based on a concatenation of the secret key of the client device, the hash value generated by the client device, and the public key of each neighbouring device.

Optionally, the session key is calculated using a key derivation function including a pseudorandom function.

Optionally, the method includes encrypting the message includes using an authenticate encryption with associated data.

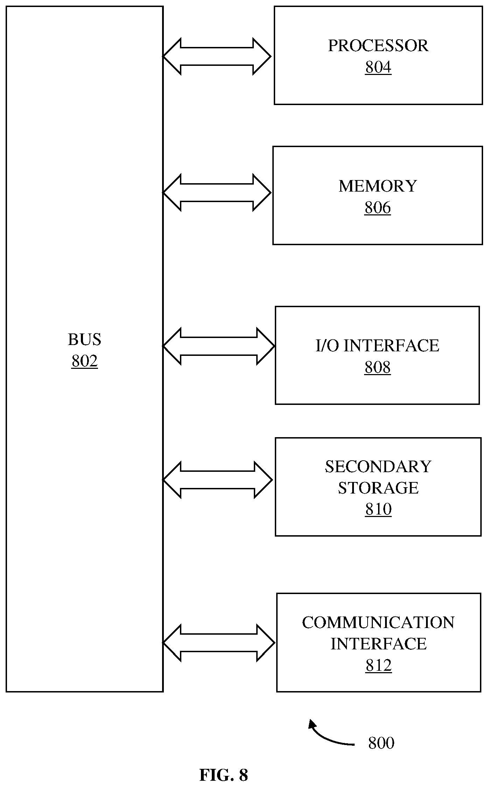

FIG. 8 is an illustration of a system **800** (e.g. a client device) in which the various architectures and functionalities of the various previous embodiments may be implemented. As shown, the system **800** includes at least one processor **804** that is connected to a sending device **802,** wherein the system **800** may be implemented using any suitable protocol, such as Peripheral Component Interconnect (PCI), PCI-Express, AGP (Accelerated Graphics Port), Hyper-Transport, or any other bus or point-to-point communication protocol (s). The system **800** also includes a memory **806.**

Control logic (software) and data are stored in the memory **806** which may take a form of random-access memory (RAM). In the disclosure, a single semiconductor platform may refer to a sole unitary semiconductor-based integrated circuit or chip. It should be noted that the term single semiconductor platform may also refer to multi-chip modules with increased connectivity which simulate on-chip modules with increased connectivity which simulate on-chip operation, and make substantial improvements over utilizing a conventional central processing unit (CPU) and bus embodiment. Of course, the various modules may also be situated separately or in various combinations of semiconductor platforms.

The system **800** may also include a secondary storage **810.** The secondary storage **810** includes, for example, a hard disk drive and a removable storage drive, representing a floppy disk drive, a magnetic tape drive, a compact disk drive, digital versatile disk (DVD) drive, recording device, universal serial bus (USB) flash memory. The removable storage drive at least one of reads from and writes to a removable storage unit in a well-known manner.

Computer programs, or computer control logic algorithms, may be stored in at least one of the memory **806** and the secondary storage **810.** Such computer programs, when executed, enable the system **800** to perform various functions as described in the foregoing. The memory **806,** the secondary storage **810,** and any other storage are possible examples of computer-readable media.

In an implementation, the architectures and functionalities depicted in the various previous figures may be implemented in the context of the processor **804,** a graphics processor coupled to a communication interface **812,** an integrated circuit (not shown) that is capable of at least a portion of the capabilities of both the processor **804** and a graphics processor, a chipset (namely, a group of integrated circuits designed to work and sold as a unit for performing related functions, and so forth).

Furthermore, the architectures and functionalities depicted in the various previous-described figures may be implemented in a context of a general computer system, a circuit board system, a game console system dedicated for entertainment purposes, an application-specific system. For example, the system **800** may take the form of a desktop computer, a laptop computer, a server, a workstation, a game console, an embedded system.

Furthermore, the system **800** may take the form of various other devices including, but not limited to a personal digital assistant (PDA) device, a mobile phone device, a smart phone, a television, and so forth. Additionally, although not shown, the system **800** may be coupled to a network (for example, a telecommunications network, a local area network (LAN), a wireless network, a wide area network (WAN) such as the Internet, a peer-to-peer network, a cable network, or the like) for communication purposes through an I/O interface **808.**

It should be understood that the arrangement of components illustrated in the figures described are exemplary and that other arrangement may be possible. It should also be understood that the various system components (and means) defined by the claims, described below, and illustrated in the various block diagrams represent components in some systems configured according to the subject matter disclosed herein. For example, one or more of these system components (and means) may be realized, in whole or in part, by at least some of the components illustrated in the arrangements illustrated in the described figures.

In addition, while at least one of these components are implemented at least partially as an electronic hardware component, and therefore constitutes a machine, the other components may be implemented in software that when included in an execution environment constitutes a machine, hardware, or a combination of software and hardware.

Although the disclosure and its advantages have been described in detail, it should be understood that various changes, substitutions, and alterations can be made herein without departing from the scope of the disclosure as defined by the appended claims

## Claims

1. A method of sending an encrypted message from a client device (202) to a server (204, 404), the method comprising:
selecting, by the client device (202), a subgroup of neighbouring devices (206A-N, 304A-N);
computing, by the client device (202), a ring signature based on a secret key of the client device (202), a hash value generated by the client device (202), and a public key of each neighbouring device;
calculating, by the client device (202), a session key based on a concatenation of a public server key and the generated hash value; and
encrypting, by the client device (202), a message using the session key and sending the encrypted message to the server (204, 404) with the generated hash value and the ring signature.

2. The method of claim 1, wherein the client device (202) and each neighbouring device receives the public key from the server (204, 404).

3. The method of claim 1 or claim 2, wherein the hash value is generated from a random number using a hash function.

4. The method of any preceding claim, wherein the ring signature is based on a concatenation of the secret key of the client device (202), the hash value generated by the client device (202), and the public key of each neighbouring device

5. The method of any preceding claim, wherein the session key is calculated using a key derivation function including a pseudorandom function.

6. The method of any preceding claim, wherein encrypting the message includes using an authenticate encryption with associated data.

7. A method of receiving an encrypted message from a client device (202) by a server (204, 404), the method comprising:
receiving, by the server (204, 404), the encrypted message from the client device (202), the encrypted message including a hash value generated by the client device (202) and a ring signature based on a secret key of the client device (202), the hash value generated by the client device (202), and a public key of each neighbouring device in a subgroup of neighbouring devices (206A-N, 304A-N) selected by the client device (202);
verifying, by the server (204, 404), the ring signature using the public key of each neighbouring device in the subgroup; and
calculating, by the server (204, 404), a session key based on a concatenation of a public server key and the generated hash value received from the client device (202).

8. The method of claim 7, wherein the public key of the client device (202) and each neighbouring device are sent by the server (204, 404).

9. The method of claim 7 or claim 8, wherein the hash value is generated from a random number using a hash function.

10. The method of any one of claims 7 to 9, wherein the ring signature is based on a concatenation of the secret key of the client device (202), the hash value generated by the client device (202), and the public key of each neighbouring device

11. The method of any one of claims 7 to 10, wherein the session key is calculated using a key derivation function including a pseudorandom function.

12. The method of any one of claims 7 to 11, wherein encrypting the message includes using an authenticate encryption with associated data.

13. A client device (202) configured to:
select a subgroup of neighbouring devices (206A-N, 304A-N);
compute a ring signature based on a secret key of the client device (202), a hash value generated by the client device (202), and a public key of each neighbouring device;
calculate a session key based on a concatenation of a public server key and the generated hash value; and
encrypt a message using the session key and send the encrypted message to a server (204, 404) with the generated hash value and the ring signature.

14. A server (204, 404) configured to:
receive the encrypted message from the client device (202), the encrypted message including a hash value generated by the client device (202) and a ring signature based on a secret key of the client device (202), the hash value generated by the client device (202), and a public key of each neighbouring device in a subgroup of neighbouring devices (206A-N, 304A-N) selected by the client device (202);
verify the ring signature using the public key of each neighbouring device in the subgroup (206A-N, 304A-N); and
calculate a session key based on a concatenation of a public server key and the generated hash value received from the client device (202).

15. A computer program comprising instructions which, when the program is executed by a processor, cause the processor to carry out the method according to claims 1-6 or the method according to claims 7-12.

## Patentansprüche

1. Verfahren zum Senden einer verschlüsselten Nachricht von einer Client-Vorrichtung (202) an einen Server (204, 404), wobei das Verfahren umfasst:
Auswählen, durch die Client-Vorrichtung (202), einer Untergruppe von benachbarten Vorrichtungen (206A-N, 304A-N);
Berechnen, durch die Client-Vorrichtung (202), einer Ringsignatur basierend auf einem geheimen Schlüssel der Client-Vorrichtung (202), einem von der Client-Vorrichtung (202) erzeugten Hashwert und einem öffentlichen Schlüssel jeder benachbarten Vorrichtung;
Berechnen, durch die Client-Vorrichtung (202), eines Sitzungsschlüssels basierend auf einer Verkettung eines öffentlichen Server-Schlüssels und des erzeugten Hashwertes; und
Verschlüsseln, durch die Client-Vorrichtung (202), einer Nachricht unter Verwendung des Sitzungsschlüssels und Senden der verschlüsselten Nachricht an den Server (204, 404) mit dem erzeugten Hashwert und der Ringsignatur.

2. Verfahren nach Anspruch 1, wobei die Client-Vorrichtung (202) und jede benachbarte Vorrichtung den öffentlichen Schlüssel von dem Server (204, 404) empfängt.

3. Verfahren nach Anspruch 1 oder Anspruch 2, wobei der Hashwert aus einer Zufallszahl unter Verwendung einer Hashfunktion erzeugt wird.

4. Verfahren nach einem der vorhergehenden Ansprüche, wobei die Ringsignatur auf einer Verkettung des geheimen Schlüssels der Client-Vorrichtung (202), des von der Client-Vorrichtung (202) erzeugten Hashwertes und des öffentlichen Schlüssels jeder benachbarten Vorrichtung basiert.

5. Verfahren nach einem der vorhergehenden Ansprüche, wobei der Sitzungsschlüssel unter Verwendung einer Schlüsselableitungsfunktion berechnet wird, die eine Pseudozufallsfunktion beinhaltet.

6. Verfahren nach einem der vorhergehenden Ansprüche, wobei das Verschlüsseln der Nachricht das Verwenden einer Authentifizierungsverschlüsselung mit zugeordneten Daten beinhaltet.

7. Verfahren zum Empfangen einer verschlüsselten Nachricht von einer Client-Vorrichtung (202) durch einen Server (204, 404), wobei das Verfahren umfasst:
Empfangen, durch den Server (204, 404), der verschlüsselten Nachricht von der Client-Vorrichtung (202), wobei die verschlüsselte Nachricht einen von der Client-Vorrichtung (202) erzeugten Hashwert und eine Ringsignatur basierend auf einem geheimen Schlüssel der Client-Vorrichtung (202), dem von der Client-Vorrichtung (202) erzeugten Hashwert und einem öffentlichen Schlüssel jeder benachbarten Vorrichtung in einer von der Client-Vorrichtung (202) ausgewählten Untergruppe benachbarter Vorrichtungen (206A-N, 304A-N) beinhaltet;
Verifizieren, durch den Server (204, 404), der Ringsignatur unter Verwendung des öffentlichen Schlüssels jeder benachbarten Vorrichtung in der Untergruppe; und
Berechnen, durch die Server (204, 404), eines Sitzungsschlüssels basierend auf einer Verkettung eines öffentlichen Server-Schlüssels und des von der Client-Vorrichtung (202) empfangenen, erzeugten Hashwertes.

8. Verfahren nach Anspruch 7, wobei der öffentliche Schlüssel der Client-Vorrichtung (202) und jede benachbarte Vorrichtung von dem Server (204, 404) gesendet werden.

9. Verfahren nach Anspruch 7 oder Anspruch 8, wobei der Hashwert aus einer Zufallszahl unter Verwendung einer Hashfunktion erzeugt wird.

10. Verfahren nach einem der Ansprüche 7 bis 9, wobei die Ringsignatur auf einer Verkettung des geheimen Schlüssels der Client-Vorrichtung (202), des von der Client-Vorrichtung (202) erzeugten Hashwertes und des öffentlichen Schlüssels jeder benachbarten Vorrichtung basiert.

11. Verfahren nach einem der Ansprüche 7 bis 10, wobei der Sitzungsschlüssel unter Verwendung einer Schlüsselableitungsfunktion berechnet wird, die eine Pseudozufallsfunktion beinhaltet.

12. Verfahren nach einem der Ansprüche 7 bis 11, wobei das Verschlüsseln der Nachricht das Verwenden einer Authentifizierungsverschlüsselung mit zugeordneten Daten beinhaltet.

13. Client-Vorrichtung (202), die dazu konfiguriert ist:
eine Untergruppe von benachbarten Vorrichtungen (206A-N, 304A-N) auszuwählen;
eine Ringsignatur basierend auf einem geheimen Schlüssel der Client-Vorrichtung (202), einem von der Client-Vorrichtung (202) erzeugten Hashwert und einem öffentlichen Schlüssel jeder benachbarten Vorrichtung zu berechnen;
einen Sitzungsschlüssel basierend auf einer Verkettung eines öffentlichen Server-Schlüssels und des erzeugten Hashwertes zu berechnen; und
eine Nachricht unter Verwendung des Sitzungsschlüssels zu verschlüsseln und die verschlüsselte Nachricht an einen Server (204, 404) mit dem erzeugten Hashwert und der Ringsignatur zu senden.

14. Server (204, 404), der dazu konfiguriert ist:
die verschlüsselte Nachricht von der Client-Vorrichtung (202) zu empfangen, wobei die verschlüsselte Nachricht einen von der Client-Vorrichtung (202) erzeugten Hashwert und eine Ringsignatur basierend auf einem geheimen Schlüssel der Client-Vorrichtung (202), dem von der Client-Vorrichtung (202) erzeugten Hashwert und einem öffentlichen Schlüssel jeder benachbarten Vorrichtung in einer von der Client-Vorrichtung (202) ausgewählten Untergruppe benachbarter Vorrichtungen (206A-N, 304A-N) beinhaltet;
die Ringsignatur unter Verwendung des öffentlichen Schlüssels jeder benachbarten Vorrichtung in der Untergruppe (206A-N, 304A-N) zu verifizieren; und
einen Sitzungsschlüssel basierend auf einer Verkettung eines öffentlichen Server-Schlüssels und des von der Client-Vorrichtung (202) empfangenen, erzeugten Hashwertes zu berechnen.

15. Computerprogramm, das Anweisungen umfasst, die, wenn das Programm von einem Prozessor ausgeführt wird, den Prozessor veranlassen, das Verfahren nach Anspruch 1-6 oder das Verfahren nach Anspruch 7-12 durchzuführen.

## Revendications

1. Procédé d'envoi d'un message chiffré d'un dispositif client (202) à un serveur (204, 404), le procédé comprenant les étapes consistant à :
choisir, par le dispositif client (202), un sous-groupe de dispositifs voisins (206A-N, 304A-N) ;
élaborer, par le dispositif client (202), une signature d'anneau basée sur une clé secrète du dispositif client (202), une valeur de hachage générée par le dispositif client (202) et une clé publique de chaque dispositif voisin ;
calculer, par le dispositif client (202), une clé de session sur la base d'une concaténation d'une clé de serveur publique et de la valeur de hachage générée ; et
chiffrer, par le dispositif client (202), un message à l'aide de la clé de session et envoyer le message chiffré au serveur (204, 404) avec la valeur de hachage générée et la signature d'anneau.

2. Procédé selon la revendication 1, dans lequel le dispositif client (202) et chaque dispositif voisin reçoivent la clé publique en provenance du serveur (204, 404).

3. Procédé selon la revendication 1 ou la revendication 2, dans lequel la valeur de hachage est générée à partir d'un nombre aléatoire à l'aide d'une fonction de hachage.

4. Procédé selon n'importe quelle revendication précédente, dans lequel la signature d'anneau est basée sur une concaténation de la clé secrète du dispositif client (202), de la valeur de hachage générée par le dispositif client (202) et de la clé publique de chaque dispositif voisin.

5. Procédé selon n'importe quelle revendication précédente, dans lequel la clé de session est calculée à l'aide d'une fonction de dérivation de clé contenant une fonction pseudo-aléatoire.

6. Procédé selon n'importe quelle revendication précédente, dans lequel le chiffrement du message comprend l'utilisation d'un chiffrement d'authentification avec des données associées.

7. Procédé de réception d'un message chiffré provenant d'un dispositif client (202) par un serveur (204, 404), le procédé comprenant les étapes consistant à :
recevoir, par le serveur (204, 404), le message chiffré provenant du dispositif client (202), le message chiffré contenant une valeur de hachage générée par le dispositif client (202) et une signature d'anneau basée sur une clé secrète du dispositif client (202), la valeur de hachage générée par le dispositif client (202) et une clé publique de chaque dispositif voisin d'un sous-groupe de dispositifs voisins (206A-N, 304AN) choisi par le dispositif client (202) ;
vérifier, par le serveur (204, 404), la signature d'anneau à l'aide de la clé publique de chaque dispositif voisin du sous-groupe ; et
calculer, par le serveur (204, 404), une clé de session sur la base d'une concaténation d'une clé de serveur publique et de la valeur de hachage générée reçue du dispositif client (202).

8. Procédé selon la revendication 7, dans lequel la clé publique du dispositif client (202) et celle de chaque dispositif voisin sont envoyées par le serveur (204, 404).

9. Procédé selon la revendication 7 ou la revendication 8, dans lequel la valeur de hachage est générée à partir d'un nombre aléatoire à l'aide d'une fonction de hachage.

10. Procédé selon l'une quelconque des revendications 7 à 9, dans lequel la signature d'anneau est basée sur une concaténation de la clé secrète du dispositif client (202), de la valeur de hachage générée par le dispositif client (202) et de la clé publique de chaque dispositif voisin.

11. Procédé selon l'une quelconque des revendications 7 à 10, dans lequel la clé de session est calculée à l'aide d'une fonction de dérivation de clé contenant une fonction pseudo-aléatoire.

12. Procédé selon l'une quelconque des revendications 7 à 11, dans lequel le chiffrement du message comprend l'utilisation d'un chiffrement d'authentification avec des données associées.

13. Dispositif client (202) configuré pour :
choisir un sous-groupe de dispositifs voisins (206A-N, 304A-N) ;
élaborer une signature d'anneau basée sur une clé secrète du dispositif client (202), une valeur de hachage générée par le dispositif client (202) et une clé publique de chaque dispositif voisin ;
calculer une clé de session sur la base d'une concaténation d'une clé de serveur publique et de la valeur de hachage générée ; et
chiffrer un message à l'aide de la clé de session et envoyer le message chiffré à un serveur (204, 404) avec la valeur de hachage générée et la signature d'anneau.

14. Serveur (204, 404) configuré pour :
recevoir le message chiffré provenant du dispositif client (202), le message chiffré contenant une valeur de hachage générée par le dispositif client (202) et une signature d'anneau basée sur une clé secrète du dispositif client (202), la valeur de hachage générée par le dispositif client (202) et une clé publique de chaque dispositif voisin d'un sous-groupe de dispositifs voisins (206A-N, 304A-N) choisi par le dispositif client (202) ;
vérifier la signature d'anneau à l'aide de la clé publique de chaque dispositif voisin du sous-groupe (206A-N, 304A-N) ; et
calculer une clé de session sur la base d'une concaténation d'une clé de serveur publique et de la valeur de hachage générée reçue du dispositif client (202).

15. Programme informatique comprenant des instructions qui, lorsque le programme est exécuté par un processeur, amènent le processeur à mettre en oeuvre le procédé selon les revendications 1 à 6 ou le procédé selon les revendications 7 à 12.
